# DEMANDE DE BREVET EUROPEEN

(11) **EP 1 186 445 A1**
(43) Date de publication de la demande: **13.03.2002**
(21) Numéro de dépôt: 01402002.8
(22) Date de dépôt: 23.07.2001
(51) Int. Cl.: B60B 19/00, B62M 1/10, B60T 1/10

(54) **Roue à accumulation et libération sélectives d'energie**

(30) Priorité: 28.07.2000 FR 0009926
(71) Demandeur: Bais, Régis, 74300 Cluses (FR)
(72) Inventeur: Bais, Régis, 74300 Cluses (FR)

(57) **Abrégé**

L'invention concerne une roue avec un dispositif en son sein qui permet de réutiliser à l'accélération l'énergie cinétique accumulée au freinage d'un objet roulant ou tournant.

L'ensemble est constitué d'un corps de roue (1) monté rotatif autour d'une structure d'arbre (10) fixe de l'objet à freiner, d'une cage intérieure (12) rotative à sens unique selon le même axe de rotation que le corps de roue (1), qui vient déformer des accumulateurs élastiques (11) disposés entre elle même et ce corps de roue (1) lors des phases de freinage et d'accélération. Quand l'utilisateur sélectionne le freinage en bloquant la bague (6) par le moyen de blocage (9), il provoque la rotation des satellites (2) qui entraîne la cage (12). Les satellites (2), retenus progressivement dans leur rotation sur leurs axes (3) par la résistance des accumulateurs (11) sur la cage (12), provoquent le freinage de la roue (1).

La sélection par l'utilisateur pour l'accélération libère la bague (6) et les satellites (2) par le moyen de déblocage (9), et le corps de roue (1) se trouve soumis à la traction par l'énergie accumulée dans les accumulateurs élastiques (11) ancrés sur la cage (12) momentanément fixe.

En raison de cette disposition, la roue selon l'invention peut être utilisée pour des décélérations/accélérations de toute nature ainsi que pour des arrêts fermes.

## Description

La présente invention concerne une roue possédant un dispositif pour accumuler l'énergie cinétique d'un moyen de transport roulant ou d'un objet tournant lorsqu'il s'engage dans une phase de freinage, et de réutiliser positivement cette énergie à l'accélération qui suit. En cas de freinage débouchant sur un arrêt de la roue, l'énergie est stockée.

Pour une grande partie des outils de transport, de fabrication, qui sont à la disposition de l'homme, l'énergie cinétique se perd sous forme de chaleur ;
Au niveau des patins pour la bicyclette, des plaquettes de freins à disques pour les voitures et autres véhicules lourds, du refoulement d'électricité dans une résistance pour un moteur électrique en décélération, etc..., entraînant ainsi dans ces va et viens incessants de grosses consommations d'énergie pour chaque relance.

Le dispositif selon l'invention rempli le double rôle de freiner et de propulser le moyen de transport roulant ou l'objet tournant.

La roue possédant un tel dispositif capable d'accumuler et de libérer sélectivement l'énergie accumulée comporte selon une première caractéristique un corps de roue monté rotatif selon un axe de rotation principal sur une structure d'arbre fixe d'un objet roulant ou tournant, une cage intérieure au corps de roue montée rotative à sens unique selon l'axe de rotation principal, un ou plusieurs accumulateurs élastique liés à la cage intérieur et disposés pour se déformer élastiquement lors des étapes de freinage et d'accélération du corps de roue, une liaison mécanique sélective de freinage commandée par l'utilisateur et conçue pour engager fonctionnellement dans un premier sens de déformation les accumulateurs élastiques entre le corps de roue et la structure d'arbre afin de freiner la rotation du corps de roue et d'accumuler l'énergie dans les accumulateurs élastiques, et une liaison mécanique sélective d'accélération, dont la commande par l'utilisateur engage fonctionnellement en sens inverse de déformation les accumulateurs élastiques entre le corps de roue et la structure d'arbre afin d'accélérer le corps de roue par la libération de l'énergie contenue dans les accumulateurs élastiques.

La liaison mécanique sélective de freinage est une liaison débrayable qui relie mécaniquement la cage intérieure à la structure d'arbre et qui provoque la rotation relative de la cage intérieure dans le sens de rotation du corps de roue à une vitesse supérieure, et la liaison mécanique sélective d'accélération et constituée par les accumulateurs élastiques même, directement interposés entre le corps de roue et la cage intérieure.

Selon des modes particuliers de réalisation :
- la liaison mécanique sélective de freinage peut comprendre :
   - une bague montée rotative selon le même axe théorique que la structure d'arbre, libre en rotation autour de cette structure d'arbre mais pouvant être solidarisée en rotation sur la structure d'arbre par un moyen de blocage
   - et un ou plusieurs satellites montées chacun en rotation sur un axe parallèle et radialement excentré sur le corps de roue, et possédant(s) d'une part une piste périphérique engagée sans glissement sur une piste périphérique correspondante de la bague et d'autre part une liaison de rotation avec la cage intérieure.
- la piste périphérique du ou des satellites est engagée sans glissement sur une piste intérieure de la cage intérieure.
- les axes de rotation du ou des satellites peuvent être réalisés directement sur le corps de roue ou indirectement sur un support solidaire de ce dernier.
- les accumulateurs élastiques peuvent être des ressorts de pression ou de compression engagés entre la cage intérieure et le corps de roue.
- la roue peut posséder des moyens de butée pour limiter la course de rotation entre la cage intérieure et le corps de roue.
- l'engagement sans glissement entre le ou les satellites et la bague d'une part et la cage intérieure d'autre part peut être obtenue par accrochage, par adhérence, par courroie, ou tout autre moyen de transmettre une rotation.
- les pistes périphériques qui lient les satellites et la bague d'une part et la cage intérieure d'autre part sont réalisées pour permettre entre elles un glissement au delà d'un certain seuil de freinage.

### Les dessins annexés illustrent l'invention :

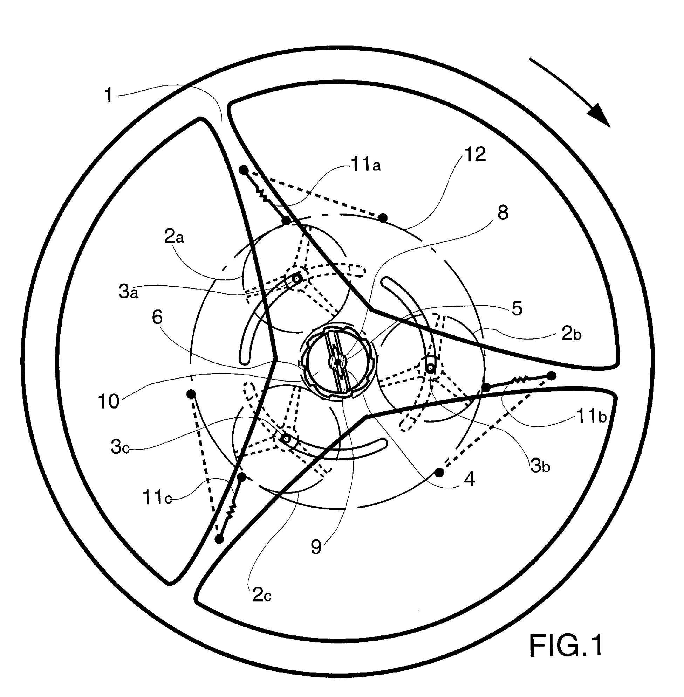

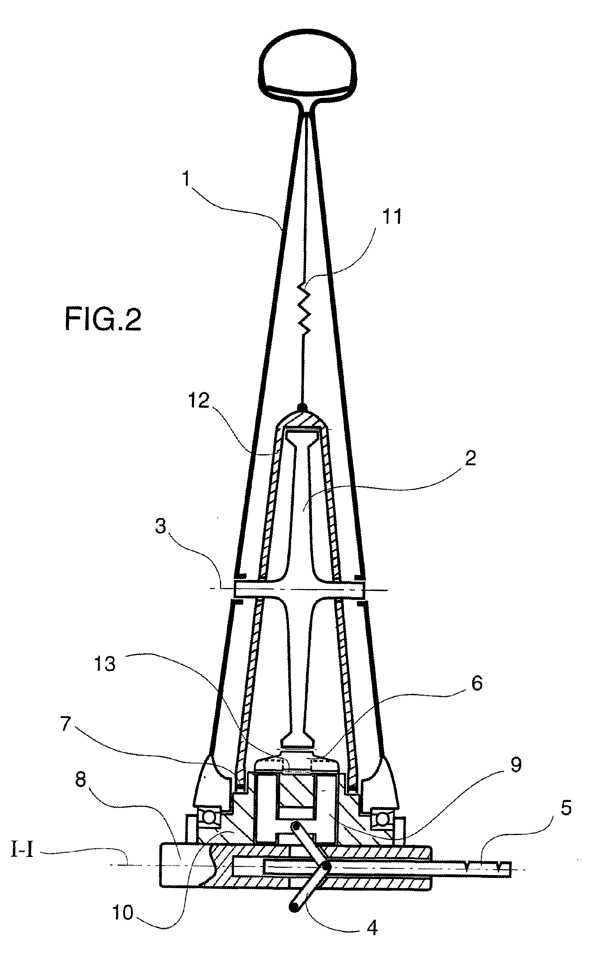

Les figures 1 et 2 forment les figures de base à la compréhension de l'invention.

La figure 1 représente une roue complète, avec représentation simplifiée des pièces constitutives du dispositif selon l'invention, pour en faciliter la lecture. La flèche indique le sens de rotation du corps de roue quand le dispositif est en service. Une représentation de certaines pièces en déplacement par rapport au corps de roue (1) quand le dispositif fonctionne figure en pointillés. Les éléments roulement (13) et système antiretour (7) ne sont pas représentés dans cette figure.

La figure 2 représente en coupe, une demi-roue avec dispositif.

La figure 3 représente une variante de l'invention possédant un satellite (2) unique avec un entraînement mixte, par engrenage côté bague (6) et par galet (15) côté cage intérieure (12). Cette dernière a ici perdu la forme de cage de la figure 1 et revêt plutôt une forme de levier.

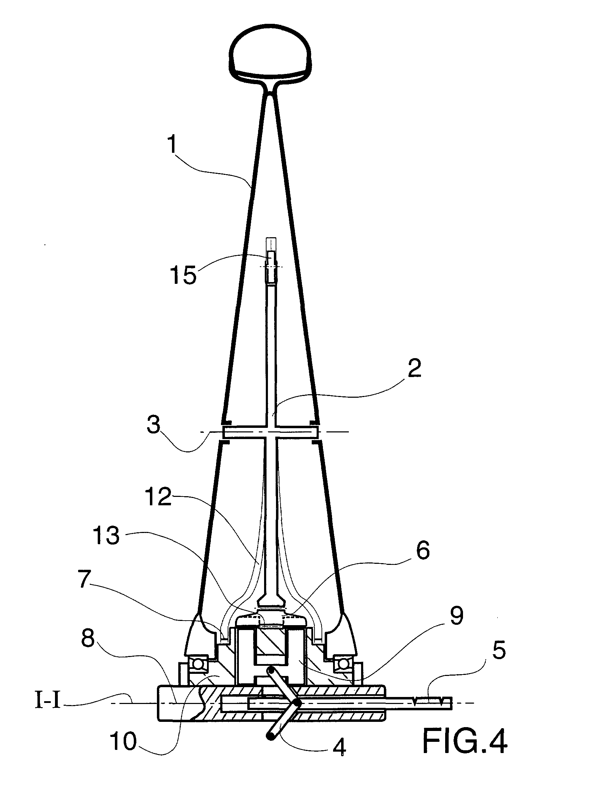

La figure 4 représente en demie coupe une roue selon l'invention et selon la forme de cage à satellite unique représentée à la figure 3.

La figure 5 représente une variante du dispositif avec une forme d'accumulateur(s) élastique(s) (11) compressible(s).

La figure 6 est tirée de la figure 5 et représente la vue localisée du galet appartenant au satellite (2) en situation de sortie par une rainure (14) de la cage intérieure (12) pour cause de surcharge. Cette fonction est facultative.

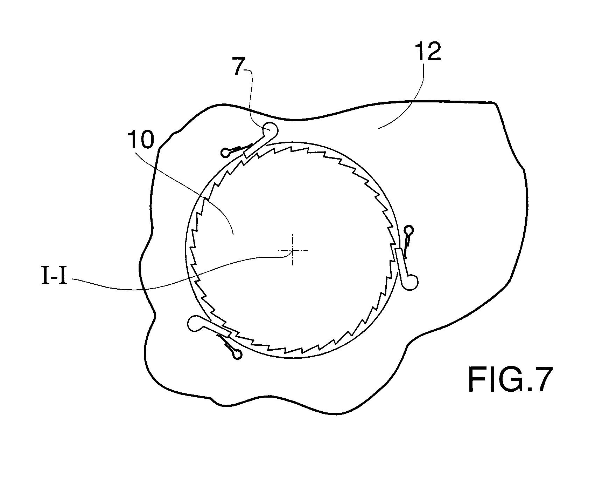

La figure 7 est la vue localisée d'une forme possible du système anti-retour (7) de la cage (12) la rendant à sens de rotation unique.

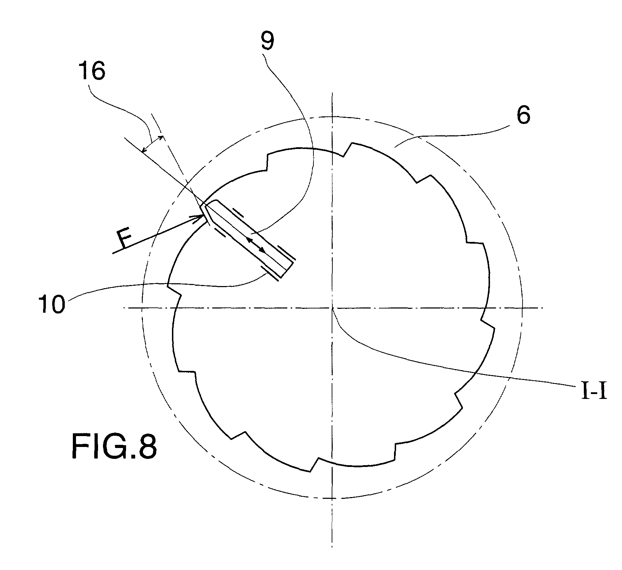

La figure 8 représente en coupe partielle, une fabrication envisageable de la relation entre un moyen de blocage (9) et la bague (6) pour le blocage de cette bague (6). Le moyen de blocage (9) est ici un doigt de forme prismatique ou cylindrique, guidé en translation dans une structure d'arbre (10) prévue à cet effet, commandée de manière sélective par l'utilisateur lors des interventions de freinage et d'accélération, et possédant une course linéaire limitée nécessaire pour son introduction et son extraction dans une des formes intérieures de la bague (6). L'extrémité du ou des doigts et les formes intérieures de la bague (6) ont ici une forme angulaire (16) correspondante, déterminée précisément pour un maintien et un retrait efficace de ces doigts (9) quand il sont soumis à une partie de la force des freinages (F).

L'exposé qui suit est scindé en quatre parties, et concerne une roue (1) en contact avec le sol, avec accumulateurs élastiques (11) de traction, et fait référence aux figures 1 et 2.

### 1) Situation avant le freinage, "le point mort".

- la liaison mécanique pour le freinage et l'accélération, et notamment la cage intérieure (12) les satellites (2) et la bague (6) tournent avec le corps de roue (1) selon l'axe (I-I), et la structure d'arbre (10) est parfaitement solidaire du corps du véhicule.
- le moyen de blocage (9), logé dans la structure d'arbre (10), est en retrait comme sur la fig.1.
- les satellites (2) ne tournent pas autour de leurs axes (3).
- la bague (6),montée sur roulement (13), est entraînée passivement par les satellites (2) et tourne en synchronisation avec la structure de roue (1). Autrement dit le point de contact entre la bague (6) et satellites (2) est fixe.
- la cage intérieure (12) est entraînée passivement par les axes (3) qui font également dans cet exemple office de butée dans les lumières même de cette cage intérieure (12).De se fait, cette dernière tourne aussi à la même vitesse que la structure de roue (1).
- le système anti-retour (7) de la cage intérieure (12) n'est pas sollicité à l'accrochage dans ce sens de rotation sur la structure d'arbre (10).

### 2)Phase N°1 :Décélération / Accumulation.

Le pilote fait passer un ordre qui actionne la tige (5), et engage ainsi le véhicule en décélération ;les biellettes (4) ont fait coulisser le moyen de blocage (9) et ce dernier est venu se loger dans une des formes intérieures de la bague (6) (jusque-là entraînée par les satellites (2)), mettant un terme à la rotation synchronisée de cette bague (6) avec le corps de roue (1). Le roulement (13) ne tourne donc plus non plus.

Cette situation contraint les satellites (2) à tourner sur eux-mêmes sur leurs axes (3) (sens horloge sur fig.1), entraînant avec eux la cage intérieure (12) dans une rotation de même sens que le corps de roue (1), créant ainsi une vitesse de rotation relative de la cage intérieure (12) supérieure à celle du corps de roue (1).(vitesse dépendante du rapport ; diamètre de piste d'entraînement de la cage intérieure / diamètre de piste d'entraînement de la bague (6)).

En conséquences ;

La cage intérieure (12) est donc devenue mobile par rapport au corps de roue (1) et les satellites (2),et l'ont observe un glissement des axes (3) dans les lumières oblongues de la cage intérieure (12).

Les accumulateurs élastiques (11) dont une extrémité est fixée au corps de roue (1) et l'autre à la cage intérieure (12), subissent une tension relative à l'écartement de ces deux points de fixation, proportionnelle à la durée du freinage.

Cette tension génère une force antagoniste croissante au point d'encrage des accumulateurs élastiques (11) sur la cage intérieure (12), jusqu'aux limites élastiques permises par ces accumulateurs (11) et tant que la force cinétique le permet. Cette force antagoniste agit progressivement à l'encontre de la rotation des satellites (2) autour de leurs axes (3), et se répercute radialement sur ces axes (3), donc sur le corps de roue (1).

Les satellites (2), progressivement immobilisés entre la bague (6) et la résistance élastique sus décrite de la cage intérieure (12), s'opposent à la rotation du corps de roue (1) Seul le véhicule dans sa totalité avec sa structure d'arbre (10) dont il est solidaire, et de manière plus caricaturale le véhicule dans sa totalité avec son passager s'il s'agit d'un véhicule à deux roue possédant la roue avant avec un tel dispositif, pourrait soulager les satellites (2), en tournoyant autour d'une roue (1) devenue immobile!

C'est l'arrêt.

### 3)Phase N°2 : Stockage.

Le véhicule est à l'arrêt.

La bague (6) est toujours bloquée par le moyen de blocage (9), et l'impossibilité pour la cage intérieure (12) de tourner dans l'autre sens comme lui incitent les accumulateurs élastiques (11) en raison de son système anti-retour (7), verrouillent le corps de roue (1) dans ses deux sens d'utilisation.

Cet auto maintient facilite la dépose du véhicule sur un plan incliné.

### 4)Phase N°3 : Relance / accélération.

Les biellettes (4),par un ordre passé sur la tige (5), commande le retrait du moyen de blocage (9).

Les satellites (2) retrouvent un degré de liberté en rotation autour de leurs axes (3) (fig.2 sens anti-horloge), degré de liberté imposé par une cage intérieure (12) à rotation à sens unique (système anti-retour (7)) et des accumulateurs (11) en tension.

Le corps de roue (1) est ici tirée dans le sens de la marche par les accumulateurs élastiques (11), ancrés sur la cage intérieure (12) à considérer dans cette séquence comme un point fixe du véhicule.

C'est au tour du corps roue (1) d'être mobile par rapport à la cage intérieure (12), et cette mobilité résorbe l'écart obtenu entre les deux extrémités des accumulateurs élastiques (11) à la phase N°1.

La position point mort du dispositif est atteinte quand les accumulateurs élastiques (11) sont déchargés de leur énergie, en même temps que la cage intérieure (12) par ses lumières oblongues se met en butée sur un point du corps de roue (1) , dans cet exemple sur les axes (3).

Le reste de la liaison mécanique, notamment les satellites (2), la bague (6), joue ici un rôle passif et ne génèrent aucune résistance à la fonction motrice des accumulateurs élastiques (11) dans cette phase.

Dans la phase de décélération, la puissance du freinage est croissante, et à l'inverse, dans la phase d'accélération, cette énergie est restituée de manière décroissante. Il en résulte que le meilleur couple de forces est instantanément disponible au moment propice de la sélection d'accélération du dispositif.

Pour un diamètre de corps de roue (1) donné, le rapport des diamètres aux points d'entraînement de la cage intérieure (12) avec les satellites (2) d'un coté, et des satellites (2) avec la bague (6) d'un autre coté, est le paramètre essentiel pour le calcul de la longueur de freinage maxi à obtenir au sol. Pour une roue à inertie, où l'invention peut faire l'objet d'application, la notion de "longueur" de freinage au sol se transforme en "durée" de freinage.

Les accumulateurs élastiques (11) peuvent être en nombre variable. Ce nombre permet de mieux répartir les forces à la périphérie de la cage (12) et sur la roue (1), et l'accroissement de ce nombre nécessite une réduction de la section de ces accumulateurs (11) pour préserver les caractéristiques d'un dispositif défini initialement.

L'angle que forme la droite d'action d'un accumulateur élastique (11) en service avec la droite passant par son point d'encrage au corps de roue (1) et le centre de ce corps de roue est déterminant pour la dynamique du dispositif. Le meilleur résultat sera obtenu avec un angle proche de 90 degrés.

Pour pallier à ce dernier point, et obtenir un meilleur rendement notamment lorsque la cage intérieure (12) travaille en grande amplitude, il est possible d'envisager un point d'encrage des accumulateurs élastiques (11) mobile en translation sur la droite décrite en second ci-dessus.

La partie de pistes périphériques correspondantes entre les satellites (2) et la cage intérieure (12) d'une part et la bague (6) d'autre part étant toujours située sur le même secteur d'angle, cette partie peut être réduite au minimum.

Selon la forme de la cage intérieure (12), les accumulateurs élastiques (11), peuvent prendre place à l'intérieur et demeurer ainsi invisibles.

Un système d'accrochage rapide des accumulateurs élastiques (11) aux points d'ancrage du corps de roue (1) et sur la cage intérieure (12) est souhaitable afin d'en faciliter l'interchangeabilité.

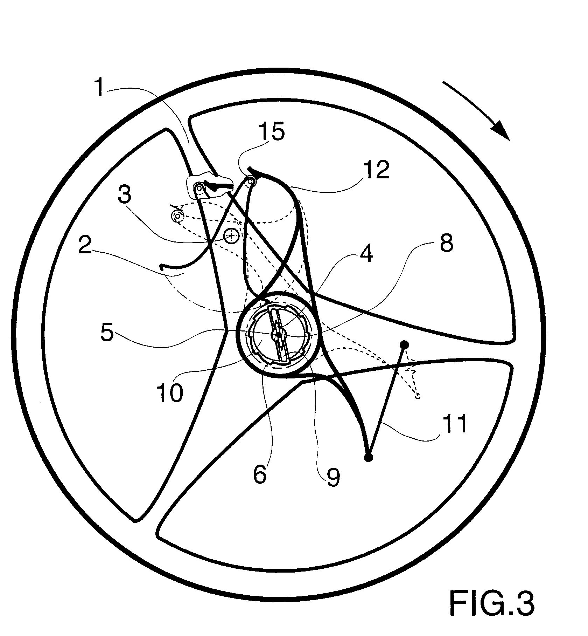

Selon le type d'application pour lequel ce dispositif est destiné, les pistes d'entraînement des trois éléments, bague (6), satellites (2) et cage (12), peut revêtir des modes variés ; engrenages en acier, engrenages en résine composite, engrenages en matière vulcanisée, denture fine, friction, solution mixte avec galet d'entraînement comme figure 3, etc...

Si le choix d'une liaison par friction ou déformable est fait entre au minimum deux des éléments tournants, bague (6),satellites (2), cage intérieure (12), cette technique peut remplir la fonction de "fusible" en cas de surcharge d'accumulation du dispositif, tout en gardant l' énergie déjà acquise à ce moment là :
1° cas : liaison lisse entre bague (6) et satellites (2) ; ces derniers cesseront de tourner autour de leurs axes (3) et se mettront à glisser sur la périphérie de la bague dentée (6).
2° cas : liaison lisse entre satellites (2) et cage intérieure (12) ; cette dernière sous la pression des accumulateurs (11) s'immobilise par rapport au corps de roue (1), et les satellites (2) en rotation, patinent au point de contact de la cage intérieure (12).
3° cas :liaison lisse entre les trois éléments bague (6), satellites (2), cage intérieure (12) ; les incidences sur les adhérences sont imprévisibles dans cette étude.

Une forme de limitation d'accumulation d'énergie d'un dispositif à piste d'entraînements non déformables est également réalisable entre les satellites (2) et la cage intérieure (12), en exécutant sur cette dernière une denture tronquée, coïncidente avec l'arrivée en tension maxi souhaitée des accumulateurs élastiques (11). Dans une telle version ;
les satellites (2) continuent de tourner autour de leurs axes (3) mais n'entraînent plus la cage intérieure (12),
la résistance à l'avancement de l'objet ralenti n'est plus croissante mais constante, l'arrêt peut survenir par la force cinétique qui diminue,
il faut aménager dans cette partie de la cage intérieure (12) où la denture est tronquée, un moyen (friction ou autre) pour éviter le retour de ces dentures pendant cette phase de décélération.

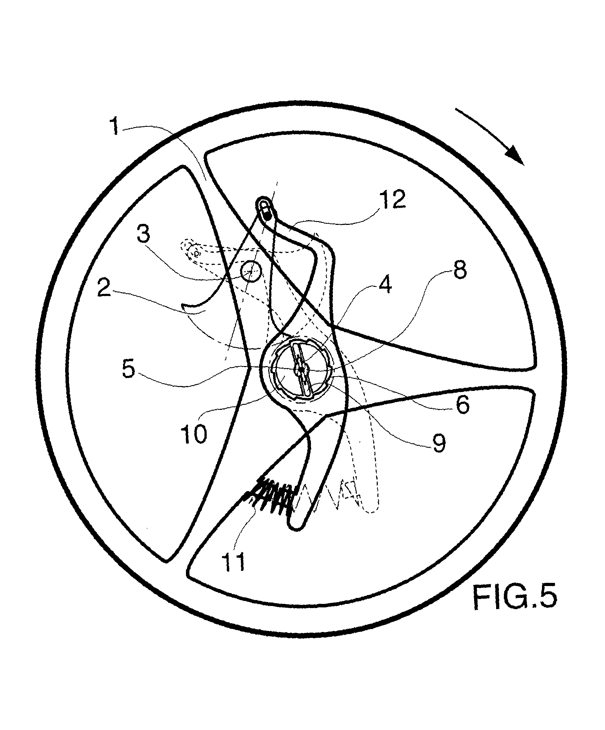

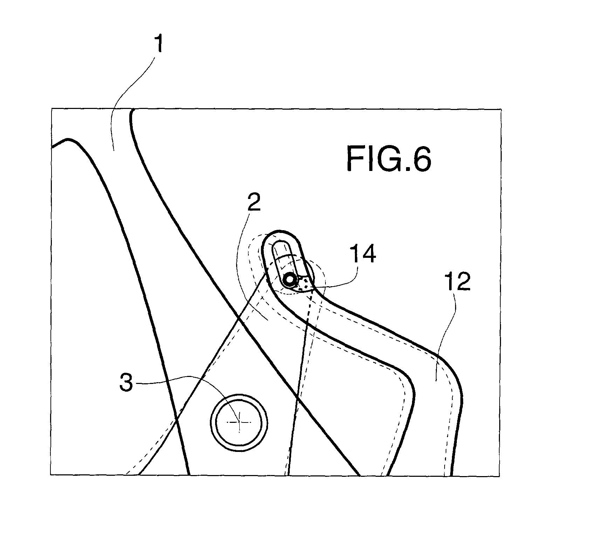

Selon la variante illustrée à la figure 5 et son grossissement figure 6, il est possible de limiter l'accumulation d'énergie par un échappement du galet du satellite (2) dans une rainure (14) prévue à cet effet sur la cage intérieure (12).Dans ce type de réalisation, le galet en situation d'échappement libère la cage intérieure (12), et le dispositif se retrouve en phase d'accélération par l'énergie accumulée. Le satellite (2) se libère également de son entraînement par la bague (6) .Le dispositif est alors hors service.
Un résultat similaire est obtenu en cas de rupture intempestive de l'accumulateur élastique (11).

La roue équipée d'un tel dispositif peut ne pas avoir de contact avec la surface de freinage si elle a été relayée physiquement à une roue en contact par friction, courroie, engrenage, roue intermédiaire ou tout autre moyens de transmettre une rotation d'une roue à une autre.

Dans une application de l'invention à un véhicule à moteur, la commande du moyen de blocage de la bague (6) peut se concevoir par un système électromagnétique, pneumatique, hydraulique, ou autre, dont l'ordre émanerait soit directement de la volonté d'un pilote ou bien d'une analyse d'informations électroniques (genre dispositif de freinage ABS automobile) définissant un seuil de vitesse déclencheur, ou bien encore des deux combinés.

Dans une application de l'invention à un véhicule automobile, et en raison du fait que le dispositif interdit la marche arrière du véhicule, cette interdiction peut être levée en offrant temporairement à la structure d'arbre (10) la liberté de tourner sur lui même, à l'aide d'un embrayage ou autre système extérieur au dispositif, et en liaison avec cette marche arrière. Dans ce cas des paliers tournants doivent êtres prévus pour la structure d'arbre (10).
Cette variante, avec contrôle sur la liberté en rotation de la structure d'arbre (10), peut également permettre la mise en et hors service du dispositif. En effet, la fixité de la structure d'arbre (10) est une caractéristique de l'invention.

Dans une application de l'invention ou la roue avec dispositif travaille pour le compte d'une autre roue, sur le même axe de rotation théorique que la roue à freiner, sans être relayées entre elles, un accouplement rigide entre la structure de roue (1) et la roue à freiner doit être réalisé. Le corps de roue (1) et la roue à freiner sont alors solidaires entre elles. (exemple d'une roue à inertie pleine à freiner)

Une roue avec un tel dispositif peut également intervenir comme support énergique au moteur électrique d'une machine. Si ce dernier à pour fonction de transmettre par courroie une rotation à un arbre, la roue selon l'invention peut s'intégrer à la machine avec un moyen de transmission à l'arbre similaire à celui du moteur, en parallèle du moteur. L'intervention de la roue vient ici diminuer les pertes d'énergie électrique du moteur dans ses freinages et diminuer sa consommation d'énergie dans ses démarrages. L'ordre de la commande de la liaison mécanique sélective de la roue selon l'invention peut émaner du variateur de contrôle du moteur même.

Le dispositif selon l'invention présente une intégration relativement aisée et intéressante à la roue de bicyclette. Muni d'un levier du type sélecteur de vitesses destiné à transmettre l'ordre du pilote à la commande sélective du dispositif, l'utilisateur possède un nouveau concept où :
- le scénario décrit en trois phases dans ce descriptif et qui s' appui sur un freinage aboutissant à l'arrêt complet du véhicule, ici le cycle, permet également des manoeuvres pertinentes selon le parcours, pour de simples ralentissements instantanément suivis d'accélérations.
- par son absence de friction quand les liaisons entre les couples de pièces bague (6) et satellite (2) d'une part et satellite (2) avec cage intérieure (12) d'autre part ne sont pas obtenues par adhérence, ce dispositif est insensible aux conditions climatiques (eau, boue).L'efficacité du système demeure inaltéré.
- quand le dispositif est au point mort, un mouvement de recule du cycle met en tension les accumulateurs élastiques (11) comme en phase de freinage. Cette tension peut être stockée par une action sur la tige (5) ou bien réutilisée à bon escient dans la foulée.
- compte tenu que le pilote d'un tel dispositif se cantonne à passer un ordre, mais n'intervient aucunement dans la puissance du freinage (comme pour un système de freinage traditionnel à patins pour un cycliste, où la pression de la main sur la poignée joue pleinement son rôle),ce dispositif assure, dans des circonstances analogues, une parfaite répétitivité.
- pour les mêmes raisons que ce dernier point, le blocage intempestif de la roue est peu probable.
- suivant le dimensionnel attribué aux pièces constitutives du dispositif, une solution mixte peut être envisagée en équipant une roue d'un dispositif à freinage court et la seconde roue d'un dispositif à freinage long, autorisant ainsi le pilote à actionner séparément ou de manière simultanée chaque dispositif suivant les circonstances.
- d'un point de vue technique, les contraintes engendrées par les forces de freinage sont contenues au sein du corps de roue (1) et agissent dans le plan de rotation de cette roue, de manière "alignées", réduisant considérablement les distorsions de cette roue (1).Les éléments fourche, jante, sont épargnées.

## Revendications

1. roue à accumulation et libération sélectives d'énergie, comprenant :
- un corps de roue (1) monté rotatif selon un axe de rotation principal (I-I) sur une structure d'arbre (10) fixe d' un objet roulant ou tournant,
- une cage intérieure (12), montée rotative à sens unique dans le corps de roue (1) selon l'axe de rotation principal (I-I),
- un ou plusieurs accumulateurs élastiques (11), liés à la cage intérieure (12) et disposés fonctionnellement pour se déformer élastiquement lors des étapes de freinage et d'accélération du corps de roue (1),
- une liaison mécanique sélective de freinage, commandée par l'utilisateur, et adaptée pour engager fonctionnellement dans un premier sens de déformation les accumulateurs élastiques (11) entre le corps de roue (1) et la structure d'arbre (10) afin de freiner la rotation du corps de roue (1) et d'accumuler l'énergie dans les accumulateurs élastiques (11),
- une liaison mécanique sélective d'accélération, commandée par l'utilisateur, et adaptée pour engager fonctionnellement en sens inverse de déformation les accumulateurs élastiques (11) entre le corps de roue (1) et la structure d'arbre (10) afin d'accélérer le corps de roue (1) en libérant l'énergie des accumulateurs élastiques (11),
**caractérisée en ce que** :
- la liaison mécanique sélective de freinage est une liaison sélectivement débrayable qui relie mécaniquement la cage intérieure (12) à la structure d'arbre (10) en provoquant la rotation relative de la cage intérieure (12) dans le sens de rotation du corps de roue (1) et à vitesse supérieure,
- les accumulateurs élastique (11) sont directement interposés entre le corps de roue (1) et la cage intérieure (12),et constituent en eux-mêmes la liaison mécanique sélective d'accélération.
- la cage intérieure (12) est associée à un système anti-retour (7) autorisant sa rotation autour de la structure d'arbre (10) dans un seul sens de rotation.

2. Roue selon la revendication 1, **caractérisée en ce que** la liaison mécanique sélective de freinage comprend :
- une bague (6), montée rotative selon un même axe théorique (I-I) que la structure d'arbre (10), libre en rotation autour de la structure d'arbre (10) mais pouvant être solidarisée en rotation sur la structure d'arbre (10) par un moyen de blocage (9) actionnable par l'utilisateur,
- un ou plusieurs satellites (2), montés chacun en rotation sur un axe (3) parallèle et radialement excentré sur le corps de roue (1),comportant d'une part une piste périphérique engagée sans glissement sur une piste périphérique correspondante de la bague (6), et comportant d'autre part une liaison de rotation avec la cage intérieure (12).

3. Roue selon la revendication 2, **caractérisée en ce que** la piste périphérique du ou des satellites (2) est engagée sans glissement sur une piste intérieure de la cage intérieure (12).

4. Roue selon l'une des revendications 2 ou 3,**caractérisée en ce que** les axes de rotation (3) du ou des satellites (2) sont réalisés directement sur le corps de roue (1) ou indirectement sur un support solidaire de ce dernier.

5. Roue selon l'une quelconque des revendications 1 à 4, **caractérisée en ce que** les accumulateurs élastiques (11) sont des ressorts de traction ou de compression engagés entre la cage intérieure (12) et le corps de roue (1).

6. Roue selon l'une quelconque des revendications 1 à 5, **caractérisée en ce qu'**elle comprend en outre des moyens de butée pour limiter la course de rotation entre la cage intérieure (12) et le corps de roue (1).

7. Roue selon l'une quelconque des revendications 2 à 4, et des revendications 5 et 6 quand elles se rattachent à la revendication 2, **caractérisée en ce que** l'engagement sans glissement entre le ou les satellites (2) et la bague (6) d'une part et la cage intérieure (12) d'autre part est obtenu par accrochage, par adhérence, par courroie, ou par tout autre moyen de transmettre une rotation.

8. Roue selon l'une quelconque des revendications 2, 3, 4 et 7, et des revendications 5 et 6 quand elles se rattachent à la revendication 2, **caractérisée en ce que** les pistes périphériques qui lient les satellites (2) et la bague (6) d'une part et la cage intérieure (12) d'autre part sont réalisées pour permettre entre elles un glissement au delà d'un certain seuil de freinage.

9. Cycle **caractérisé en ce qu'**il est équipé d'une ou de deux roues selon l'une quelconque des revendications 1 à 8.
